# EUROPÄISCHE PATENTANMELDUNG

(11) **EP 4 279 426 A1**
(43) Veröffentlichungstag der Anmeldung: **22.11.2023**
(21) Anmeldenummer: 23160668.2
(22) Anmeldetag: 08.03.2023
(51) Int. Cl.: B65G 33/02, B65G 33/32

(54) **FÖRDERSCHNECKENANORDNUNG ZUM TRANSPORTIEREN VON BEHÄLTNISSEN**

(30) Priorität: 19.05.2022 DE 102022112576
(71) Anmelder: Leibinger GmbH, 79331 Teningen (DE)
(72) Erfinder: Budde, Stefan, 79346 Endingen (DE); Leibinger, Benedikt, 79104 Freiburg im Breisgau (DE)
(74) Vertreter: RACKETTE Patentanwälte PartG mbB

(57) **Zusammenfassung**

Eine Vorrichtung zum Transportieren von Behältnissen (103) in einer Längsrichtung weist eine Förderschneckenanordnung (109) auf, die mit mehreren Förderschnecken (112, 115, 118) ausgebildet ist. Förderschnecken (112, 115) sind mittels einer Schalteinrichtung (124) unabhängig voneinander wahlweise drehbar. Dadurch lassen sich Behältnisse (103) flexibel beispielsweise zu Behandlungsstationen einer Einrichtung zum Behandeln von Behältnissen (103) transportieren, an den Behandlungsstationen im Stillstand belassen und von den Behandlungsstationen abtransportieren.

## Beschreibung

Die Erfindung betrifft eine Vorrichtung zum Transportieren von Behältnissen gemäß dem Oberbegriff des Anspruchs 1.

Eine derartige Vorrichtung ist aus DE 10 2020 111 119 A1 bekannt. Die vorbekannte Vorrichtung zum Transportieren von Behältnissen in einer Längsrichtung verfügt über eine Förderschneckenanordnung, die eine sich in der Längsrichtung erstreckende, drehbare Förderschnecke aufweist. Mit der Förderschnecke sind zwischen einer Wendel der Förderschnecke angeordnete Behältnisse bei Drehen der Förderschnecke in der Längsrichtung verschiebbar.

Der Erfindung liegt die Aufgabe zugrunde, eine Vorrichtung der eingangs genannten Art anzugeben, die sich bei Integration in eine Einrichtung zum Behandeln von Behältnissen an verschiedene Behandlungszeiten erfordernden Behandlungsstationen durch ein flexibles Zuführen zu und Verweilen an den Behandlungsstationen auszeichnet.

Diese Aufgabe wird bei einer Vorrichtung der eingangs genannten Art erfindungsgemäß mit den kennzeichnenden Merkmalen des Anspruchs 1 gelöst.

Dadurch, dass die Förderschneckenanordnung eine Anzahl von unabhängig voneinander, mittels einer Schalteinrichtung gesteuert wahlweise drehbaren Förderschnecken aufweist, lassen sich Behältnisse insbesondere auch mit verschiedenen Geschwindigkeiten und zu verschiedenen Zeiten wahlweise in Längsrichtung bewegen oder während unterschiedlicher Zeitdauern an Behandlungsstationen bewegungsfrei anordnen. Dadurch lassen sich insbesondere auch zahlenmäßig eher relativ kleine Chargen an Behältnissen beispielsweise in Abstimmung von Behandlungszeiten an Behandlungsstationen bewegen beziehungsweise im Stillstand belassen.

Weitere zweckmäßige Ausgestaltungen sind Gegenstand der abhängigen Ansprüche.

Weitere zweckmäßige Ausgestaltungen und Vorteile der Erfindung ergeben sich aus der nachfolgenden Beschreibung von Ausführungsbeispielen der Erfindung mit Bezug auf die Figuren der Zeichnung.

Es zeigen:
- Fig. 1: in einer perspektivischen Ansicht ein erstes Ausführungsbeispiel einer Vorrichtung gemäß der Erfindung mit einer mechanischen Schalteinrichtung,
- Fig. 2: in einer teilgeschnittenen Seitenansicht das Ausführungsbeispiel gemäß Fig. 1 im Bereich von zwei Stelleinheiten,
- Fig. 3: in einer Schnittansicht quer zu einer Längsrichtung eine Stelleinheit des ersten Ausführungsbeispiels in einer ersten Schaltstellung,
- Fig. 4: in einer Schnittansicht quer zu einer Längsrichtung eine Stelleinheit des ersten Ausführungsbeispiels in einer zweiten Schaltstellung,
- Fig. 5: in einer Seitenansicht das Ausführungsbeispiel gemäß Fig. 1 mit einer Anzahl von Behandlungsstationen einer Einrichtung zum Behandeln von Behältnissen mit den Behältnissen in einer ersten Anordnung,
- Fig. 6: in einer Seitenansicht das Ausführungsbeispiel gemäß Fig. 1 mit einer Anzahl von Behandlungsstationen einer Einrichtung zum Behandeln von Behältnissen mit den Behältnissen in einer zweiten Anordnung,
- Fig. 7: in einer perspektivischen Ansicht ein zweites Ausführungsbeispiel einer Vorrichtung gemäß der Erfindung mit zwei mehrere Förderschnecken aufweisenden Schneckenanordnungen,
- Fig. 8: in einer detaillierten Schnittansicht in Längsrichtung eine Förderschnecke des zweiten Ausführungsbeispiels mit einem Förderschneckenantrieb für diese Förderschnecke,
- Fig. 9: in einer perspektivischen Ansicht ein drittes Ausführungsbeispiel einer Vorrichtung gemäß der Erfindung mit zwei mehrere Förderschnecken aufweisenden Schneckenanordnungen, wobei die Förderschnecken außenseitig zum Drehen antreibbar sind,
- Fig. 10: in einer Schnittansicht das dritte Ausführungsbeispiel gemäß Fig. 9 mit die Förderschnecken antreibenden Kupplungszahnrädern in einer ersten Stellung und
- Fig. 11: in einer Schnittansicht das dritte Ausführungsbeispiel gemäß Fig. 9 mit die Förderschnecken antreibenden Kupplungszahnrädern in einer zweiten Stellung.

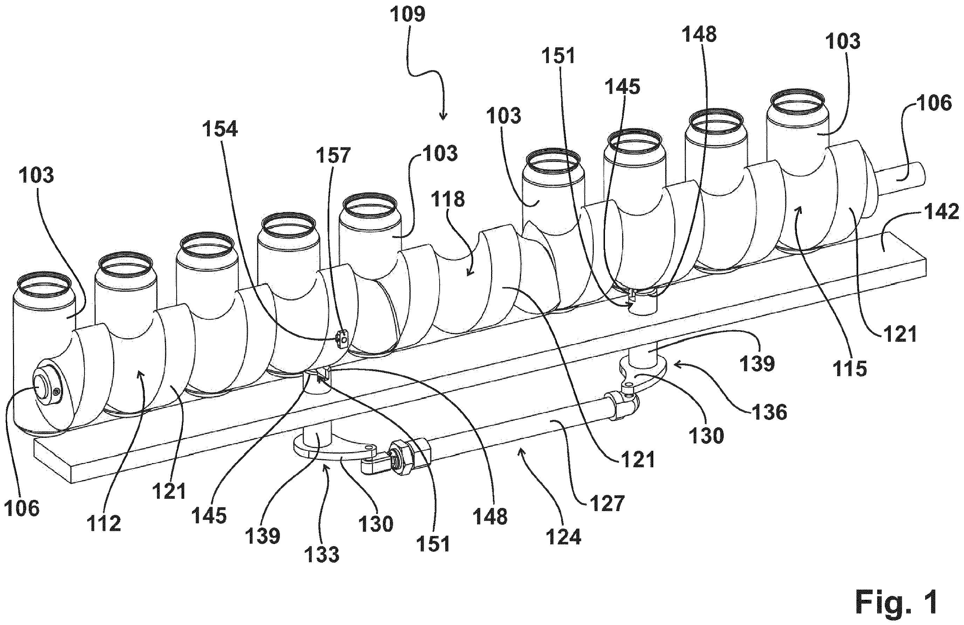

Fig. 1 zeigt in einer perspektivischen Ansicht ein erstes Ausführungsbeispiel einer Vorrichtung gemäß der Erfindung zum Transportieren von Behältnissen 103, hier beispielhaft in Gestalt von Getränkedosen, in einer Längsrichtung, die sich entlang einer motorisch antreibbaren Antriebswelle 106 einer Förderschneckenanordnung 109 erstreckt. An der Antriebswelle 106 sind bei diesem Ausführungsbeispiel eine randseitig angeordnete erste Förderschnecke 112, eine weitere randseitig angeordnete zweite Förderschnecke 115 und eine zwischen den randseitig angeordneten Förderschnecken 112, 115 angeordnete dritte Förderschnecke 118 angebracht, die jeweils mit einer spiralförmigen Wendel 121 ausgebildet und durch einen weiter unten näher erläuterten innenliegenden Antriebsmechanismus zum Drehen antreibbar sind. Zwischen dem jeweiligen Wendelgang einer Wendel 121 lassen sich die Behältnisse 103 einfügen, so dass die Behältnisse 103 bei Drehen einer Förderschnecke 112, 115, 118 in der Längsrichtung entlang der Antriebswelle 106 bewegbar sind.

Weiterhin lässt sich der Darstellung gemäß Fig. 1 entnehmen, dass die Förderschneckenanordnung 109 gemäß Fig. 1 über eine mechanisch wirkende Schalteinrichtung 124 verfügt, die mit einem Betätigungszylinder 127 ausgestattet ist. Der Betätigungszylinder 127 ist zwischen einer in Fig. 1 dargestellten eingefahrenen Stellung sowie einer ausgefahrenen Stellung bewegbar und greift mit seinen Enden an Anlenkflanschen 130 einer ersten Stelleinheit 133 beziehungsweise einer zweiten Stelleinheit 136 an.

Die mit dem jeweiligen Ende des Betätigungszylinders 127 drehbar verbundenen Anlenkflansche 130 stehen drehfest mit jeweils einer Betätigungswelle 139 der ersten Stelleinheit 133 beziehungsweise der zweiten Stelleinheit 136 in Verbindung, die im Bereich ihres von den Anlenkflanschen 130 abgewandten Enden drehbar in einer Lagerplatte 142 gehalten sind.

Die von den Anlenkflanschen 130 abgewandten Enden der Betätigungswellen 139 weisen zwei Seitenflanken 145, 148 auf, zwischen denen eine Eingriffsnut 151 ausgebildet ist.

Bei der Förderschneckenanordnung 109 gemäß Fig. 1 sind die erste Förderschnecke 112 und die zweite Förderschnecke 115, zwischen denen die dritte Förderschnecke 118 angeordnet ist, mit jeweils einem Koppelstift 154 ausgebildet, der sich radial von einer Außenseite der Wendel 121 nach radial innen in Richtung der Antriebswelle 106 erstreckt. Der Koppelstift 154 ist an seinem nach radial außen weisenden und über die Wendel 121 vorstehenden Ende mit einem beispielsweise rechteckig ausgebildeten Endplättchen 157 ausgestattet, dessen Dimensionen zum randseitigen formschlüssigen Eingriff in die jeweilige Eingriffsnut 151 einer Betätigungswelle 139 eingerichtet ist.

Die Förderschnecken 112, 115, 118 sind, wie weiter unten näher erläutert, unabhängig voneinander wahlweise drehbar.

Bei dem in Fig. 1 dargestellten Ausführungsbeispiel ist die zwischen der ersten Förderschnecke 112 und der zweiten Förderschnecke 115 angeordnete dritte Förderschnecke 118 permanent drehfest mit der Antriebswelle 106 verbunden, während die erste Förderschnecke 112 und die zweite Förderschnecke 115 mittels der Schalteinrichtung 124 gesteuert durch Drehen des jeweiligen Koppelstifts 154 lösbar drehfest mit der Antriebswelle 106 koppelbar und demnach auch von der Antriebswelle 106 lösbar sind.

In der Darstellung gemäß Fig. 1 sind die Wendel 121 der ersten Förderschnecke 112 und der dritten Förderschnecke 118 fluchtend miteinander ausgerichtet, so dass sich bei einem gemeinsamen Drehen der ersten Förderschnecke 112 und der dritten Förderschnecke 118 mit einer jeweils gleichen Drehgeschwindigkeit die Behältnisse 103 von einem Transportwirkbereich der ersten Förderschnecke 112 in einem Transportwirkbereich der dritten Förderschnecke 118 überführen lassen.

In der Darstellung gemäß Fig. 1 ist somit die erste Förderschnecke 112 drehfest mit der Antriebswelle 106 verbunden, während die zweite Förderschnecke 115 aufgrund einer entsprechenden Drehstellung des in Fig. 1 nicht sichtbaren Koppelstifts 154 durch die Betätigungswelle 139 der auf die zweite Förderschnecke 115 einwirkenden zweite Stelleinheit 136 von der Antriebswelle 106 entkoppelt ist, so dass die in dem Transportwirkbereich der zweiten Förderschnecke 115 angeordneten Behältnisse 103 bei Drehen der Antriebswelle 106 stillstehen.

Die gemeinsame Drehung der ersten Förderschnecke 112 und der dritten Förderschnecke 118 erfolgt so lange gemeinsam, bis wenigstens ein Behältnis 103 den Transportwirkbereich der dritten Förderschnecke 118 vollständig durchlaufen hat und nach Durchlaufen einer vorbestimmten Anzahl von vollen Umdrehungen in einer entsprechenden Schaltstellung der ersten Förderschnecke 112 deren Endplättchen 157 des Koppelstifts 154 in der Eingriffsnut 151 der ersten Stelleinheit 133 angeordnet ist.

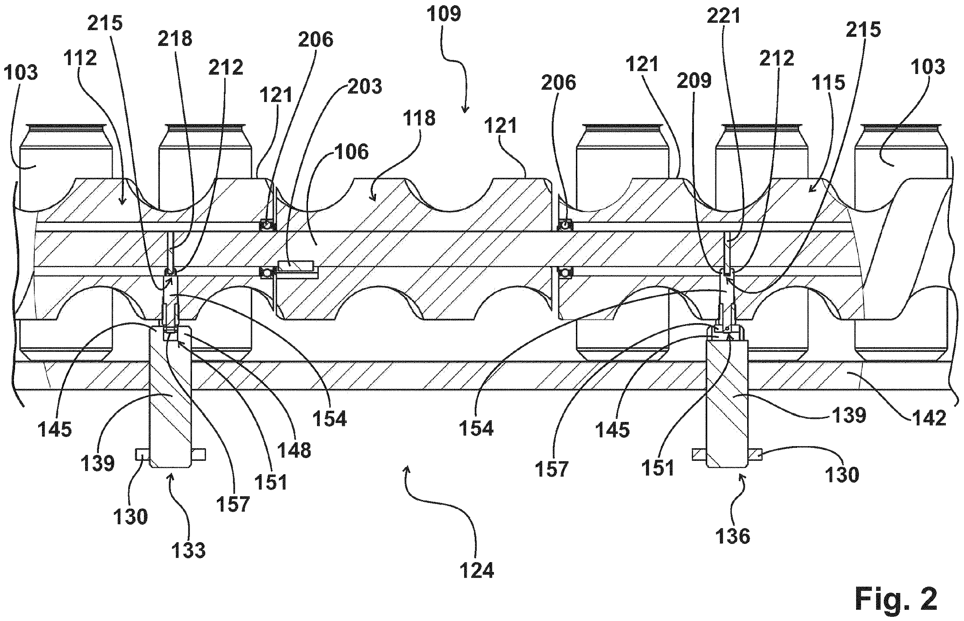

Fig. 2 zeigt in einer Schnittansicht in Längsrichtung das Ausführungsbeispiel gemäß Fig. 1 im Bereich der Stelleinheiten 133, 136. In der Darstellung gemäß Fig. 2 lässt sich erkennen, dass die mittig angeordnete dritte Förderschnecke 118 mittels einer Passfeder 203 permanent drehfest mit der Antriebswelle 106 verbunden sind, während die erste Förderschnecke 112 und die zweite Förderschnecke 115 mittels Kugellager 206 gegenüber der Antriebswelle 106 drehbar gelagert sind.

Weiterhin lässt sich der Darstellung gemäß Fig. 2 entnehmen, dass die Koppelstifte 154 an ihren von dem jeweiligen Endplättchen 157 abgewandten, nach radial innen ragenden Enden mit Randwangen 209, 212 ausgebildet sind, zwischen denen eine Koppelnut 215 ausgebildet ist.

Weiterhin lässt sich der Darstellung gemäß Fig. 2 entnehmen, dass die Antriebswelle 106 einen mit dem Koppelstift 154 der ersten Stelleinheit 133 zusammenwirkenden ersten Antriebsstift 218 und einen mit dem Koppelstift 154 der zweiten Stelleinheit 136 zusammenwirkenden zweiten Antriebsstift 221 trägt, die mit einem Ende nach radial außen über die Antriebswelle 106 überstehen und in der Darstellung gemäß Fig. 2 in die jeweilige Koppelnut 215 des Koppelstifts 154 der ersten Stelleinheit 133 beziehungsweise der zweiten Stelleinheit 136 eingreifen.

Je nach Drehstellung des Koppelstifts 154 ist eine randseitige Förderschnecke 112, 115 entweder durch Anschlag des nach radial außen überstehenden Endes des jeweiligen Antriebsstifts 218, 221 an Randwangen 209, 212 lösbar drehfest mit der Antriebswelle 106 verbunden oder aufgrund Durchtretens des Antriebsstifts 218, 221 durch die zwischen den Randwangen 209, 212 ausgebildete Koppelnut 215 von der Drehung der Antriebswelle 106 entkoppelt.

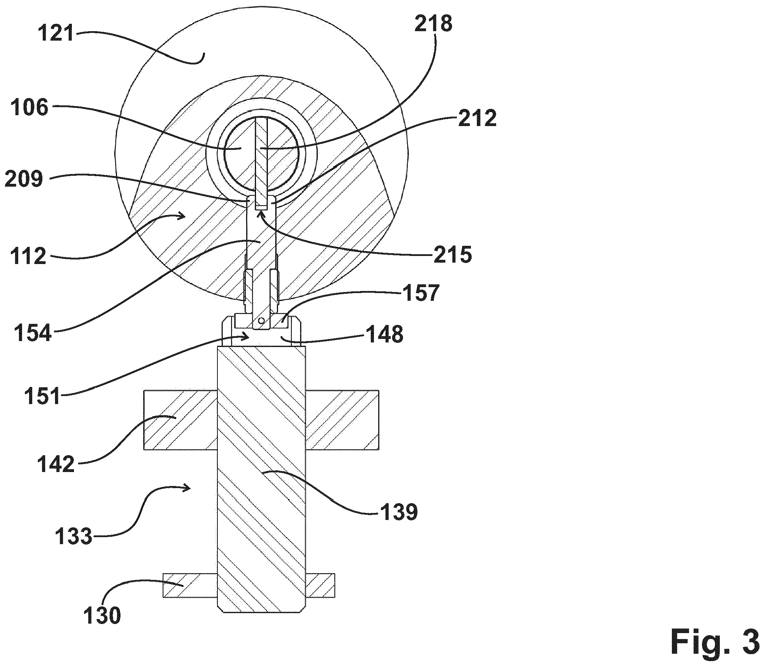

Fig. 3 zeigt in einer Schnittansicht rechtwinklig zu der Antriebswelle 106 beispielhaft die Förderschneckenanordnung 109 im Bereich der ersten Stelleinheit 133 mit der Betätigungswelle 139 in der Drehstellung gemäß Fig. 2. Aus der Darstellung gemäß Fig. 3 ist ersichtlich, dass in dieser Drehstellung einer Betätigungswelle 139 die betreffende Förderschnecke 112, 115, hier die erste Förderschnecke 112, durch Anschlag des jeweiligen Antriebsstifts 218, 221 an den Randwangen 209, 212 des Koppelstifts 154 lösbar drehfest mit der Antriebswelle 106 verbunden ist.

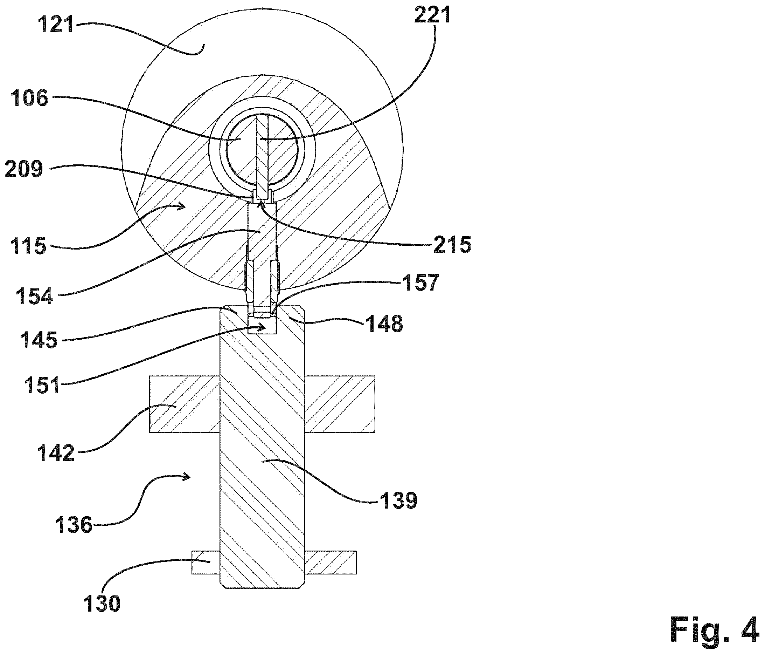

Fig. 4 zeigt beispielhaft die Förderschneckenanordnung 109 im Bereich der zweiten Stelleinheit 136 in der Drehstellung gemäß Fig. 2, bei der abweichend von der Drehstellung gemäß Fig. 3 bei Drehen der Antriebswelle 106 das radial über die Antriebswelle 106 überstehende Ende des zweiten Antriebsstifts 221 behinderungsfrei durch die an dem radial innenseitig liegenden Ende des Koppelstifts 154 der zweiten Stelleinheit 136 ausgebildeten Koppelnut 215 durchtritt, so dass die jeweilige wahlweise mit der Antriebswelle 106 verbindbare Förderschnecke 112, 115 von der Drehung der Antriebswelle 106 entkoppelt und durch den Anschlag des Endplättchens 157 an den Seitenflanken 154, 148 der Betätigungswelle 139 der jeweiligen Stelleinheit 133, 136 bezüglich Drehung festgelegt ist.

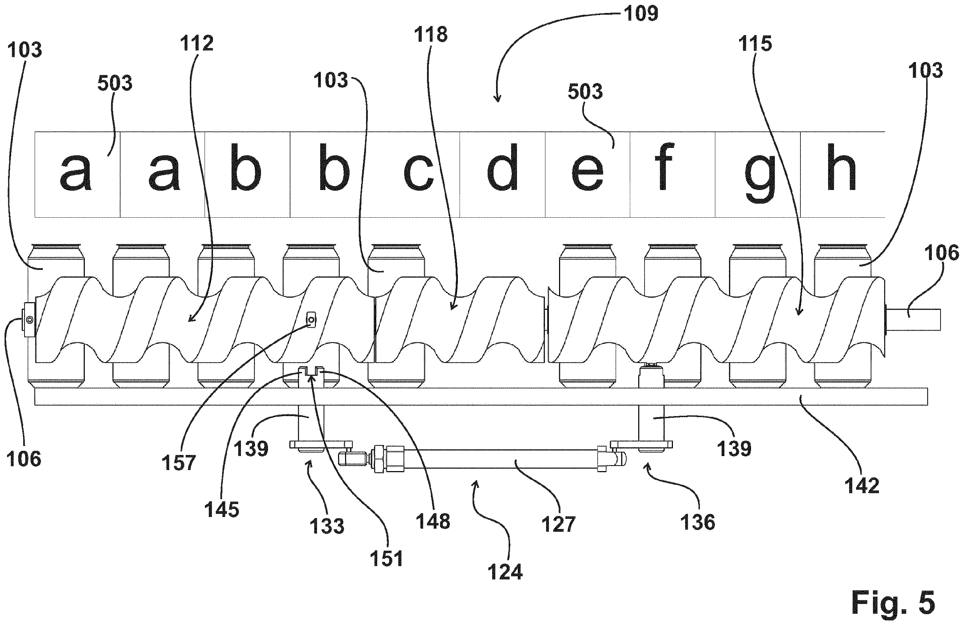

Fig. 5 zeigt in einer Seitenansicht das erste Ausführungsbeispiel gemäß Fig. 1 mit einer sehr schematisch dargestellten Anordnung von Behandlungsstationen 503 verschiedener Typen a, b, c, d, e, f, g, h. In der eingefahrenen Stellung des Betätigungszylinders 127 der Schalteinrichtung 124 ist die zweite Förderschnecke 115 aufgrund Entkopplung von der Antriebswelle 106 in Ruhe, so dass die in Behandlungsstellung an den Behandlungsstationen 503 des Typs e, f, g, h angeordneten Behältnisse 103 in Ruhe und entsprechend des Typs der jeweiligen Behandlungsstation 503 behandelbar sind. Die in den Transportwirkbereichen der ersten Förderschnecke 112 und der dritten Förderschnecke 118 befindlichen Behältnisse 103 wiederum sind aufgrund zwangsweiser Bewegung der dritten Förderschnecke 118 und der gewählten drehfesten Verbindung der ersten Förderschnecke 112 mit der Antriebswelle 106 in Längsrichtung, und zwar auf die zweite Förderschnecke 115 zu, in Bewegung.

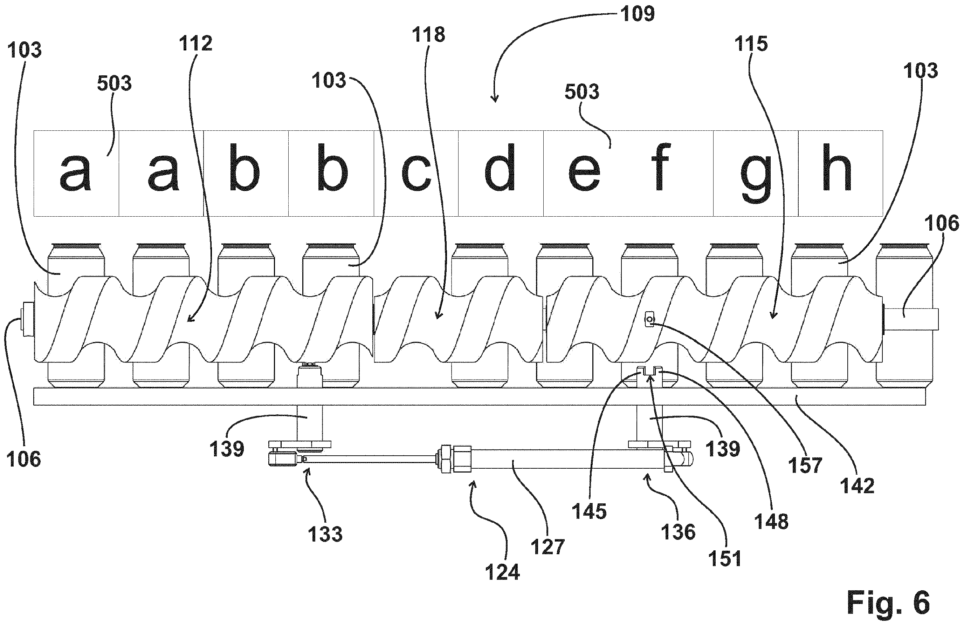

Fig. 6 zeigt in einer Seitenansicht entsprechend Fig. 5 das erste Ausführungsbeispiel gemäß Fig. 1, wobei mit dem Betätigungszylinder 127 der Schalteinrichtung 124 in der ausgefahrenen Stellung nunmehr die erste Förderschnecke 112 aufgrund Freistellens von der Drehung der Antriebswelle 106 in Ruhe und die zweite Förderschnecke 115 drehfest mit der Antriebswelle 106 verbunden ist, so dass sich in die in dem Transportwirkbereich der zweiten Förderschnecke 115 und der dritten Förderschnecke 118 befindlichen Behältnisse 103 in der Längsrichtung von der ersten Förderschnecke 112 weg bewegen.

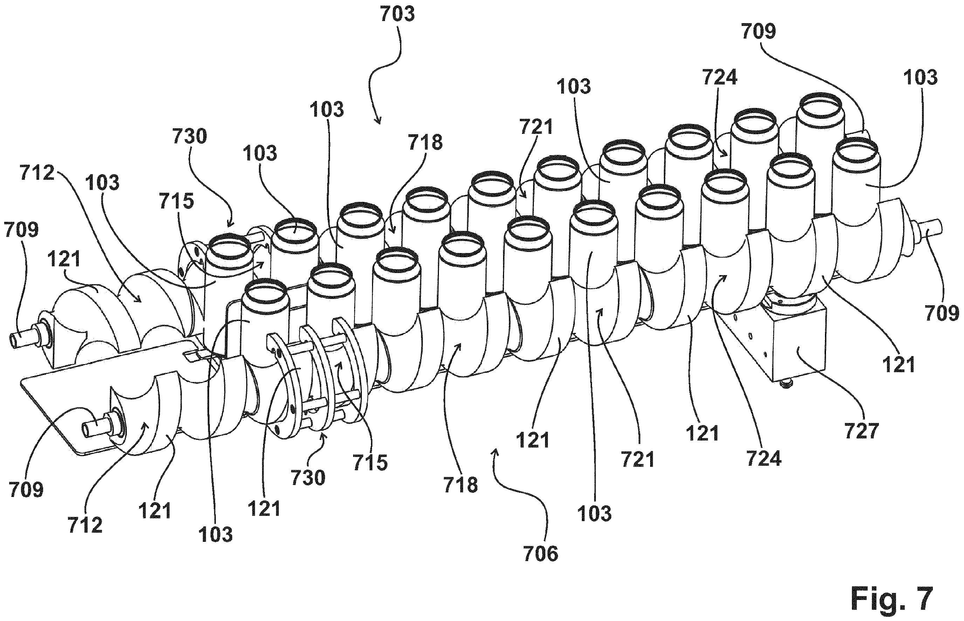

Fig. 7 zeigt in einer perspektivischen Ansicht ein zweites Ausführungsbeispiel einer Vorrichtung zum Transportieren von Behältnissen 103 gemäß der Erfindung, wobei sich bei dem zweiten Ausführungsbeispiel und dem anhand Fig. 1 bis Fig. 6 erläuterten ersten Ausführungsbeispiel einander entsprechende Elemente mit gleichen Bezugszeichen versehen und zum Vermeiden von Wiederholungen gegebenenfalls nicht nochmals näher erläutert sind.

Das zweite Ausführungsbeispiel gemäß Fig. 7 verfügt über eine erste Schneckenförderanordnung 703 und über eine zweite Schneckenförderanordnung 706, die sich beide in einer Längsrichtung erstrecken und aufgrund Spiegelsymmetrie funktional gleich aufgebaut sind.

Die Schneckenförderanordnungen 703, 706 verfügen über jeweils eine feststehende Achse 709, an der bei dem zweiten Ausführungsbeispiel jeweils fünf Förderschnecken 712, 715, 718, 721, 724 angeordnet sind. Jede Förderschnecke 712 bis 724 ist mit einer spiralartig ausgebildeten Wendel 121 ausgebildet, wobei die Wendel 121 der Förderschnecken 712 bis 724 eine jeweils gleiche Steigung aufweisen, um Behältnisse 103, wie in Fig. 7 beispielhaft dargestellt Getränkedosen, in der sich entlang der Achsen 709 erstreckenden Längsrichtung zu transportieren.

Die Förderschnecken 712 bis 724 der Schneckenförderanordnungen 703, 706 sind bei dem weiteren Ausführungsbeispiel über eine in Fig. 7 nicht dargestellte gemeinsam genutzte, elektrisch arbeitende Schalteinrichtung sowie einen innenliegenden Antriebsmechanismus zur Drehung antreibbar.

Weiterhin sind in der Darstellung gemäß Fig. 7 ein Anpressmodul 727 für eine Verschließeinheit als Beispiel einer Behandlungsstation und als Beispiel für weitere Behandlungsstationen einer Einrichtung zum Behandeln von Behältnissen 103, in die die Schneckenförderanordnungen 703, 706 integriert sind, Schwenkstationen 730 dargestellt, mit denen die im Bereich der Schwenkstationen 730 befindlichen Behältnisse 103 um vorzugsweise 180 Grad von einer in Fig. 7 darstellten aufrechten Stellung mit nach oben weisender Öffnung in eine Über-Kopf-Stellung mit nach unten geöffneten Behältnissen 103 schwenkbar, um in der Über-Kopf-Stellung beispielweise Reinigungsvorgänge durchzuführen.

Die Förderschnecken 712 bis 724 sind, wie weiter unten näher erläutert, mittels der elektrisch arbeitenden Schalteinrichtung unabhängig voneinander wahlweise um die jeweilige Achse 709 drehbar.

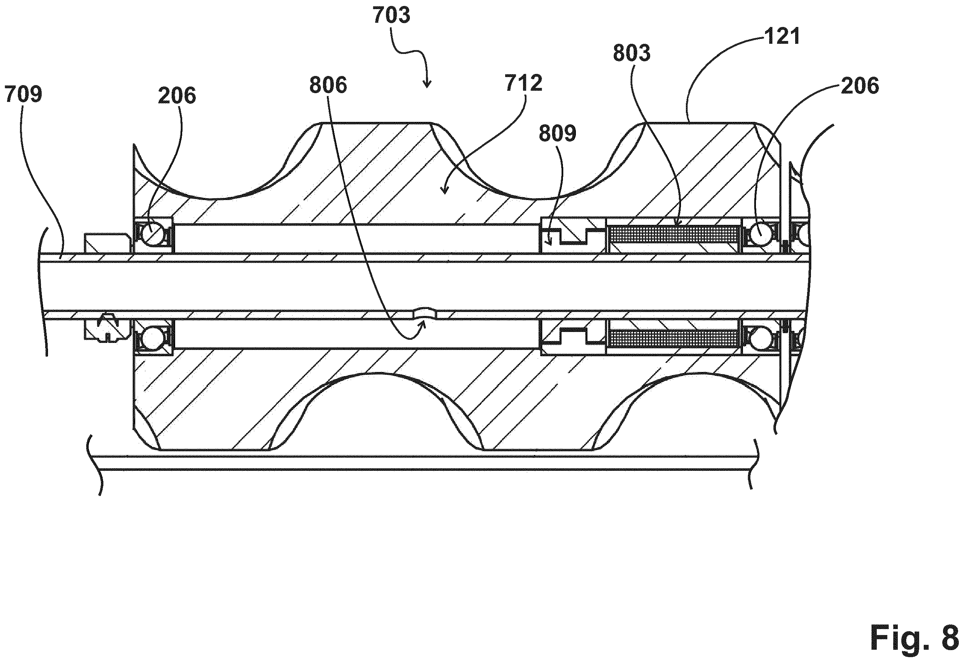

Fig. 8 zeigt in einer Schnittansicht in Längsrichtung beispielhaft die erste Förderschnecke 712 der ersten Schneckenförderanordnung 703 gemäß Fig. 7, wobei die weiteren Förderschnecken 718, 721, 724 der ersten Schneckenförderanordnung 703 und die Förderschnecken 712 bis 724 der zweiten Schneckenförderanordnung 706 bis auf gegebenenfalls unterschiedliche Dimensionen in Längsrichtung entsprechend der ersten Förderschnecke 712 der ersten Schneckenförderanordnung 703 aufgebaut sind.

Die in Fig. 8 dargestellte Förderschnecke 712 ist mittels randseitig angeordneter Kugellager 206 drehbar um die Achse 709 gelagert und weist einen zwischen den Kugellagern 206 angeordneten, sich an der Achse 709 abstützenden, innenliegenden Förderschneckenantrieb 803 auf, der über in Fig. 8 nicht dargestellte, durch eine in der Achse 709 ausgebildete Leitungsausnehmung 806 geführte Steuerleitungen mit der elektrisch arbeitenden Schalteinrichtung verbunden ist. Weiterhin ist zwischen der radialen Innenseite der Förderschnecke 712 und der radialen Außenseite der Achse 709 ein Drehencoder 809 angeordnet, mit dem die Drehstellung der Förderschnecke 712 in Bezug auf die Achse 709 erfassbar und über ebenfalls in Fig. 8 nicht dargestellte Signalleitungen der elektrisch arbeitenden Schalteinrichtung einspeisbar ist.

Aufgrund des Vorsehens von Förderschneckenantrieben 803 und Drehencodern 809 für jede Förderschnecke 712 bis 724 der Schneckenförderanordnungen 703, 706 lassen sich somit die Behältnisse 103 in Längsrichtung der Schneckenförderanordnungen 703, 706 durch bei Bedarf voneinander völlig unabhängiges wahlfreies Drehen der Förderschnecken 712 bis 724 jeder Schneckenförderanordnung 703, 706 mit verschiedenen Taktungen bewegen, um eine einfache Anpassung an unterschiedliche Behandlungsdauern an verschiedenen Behandlungsstationen mit entsprechenden Takten sicherzustellen.

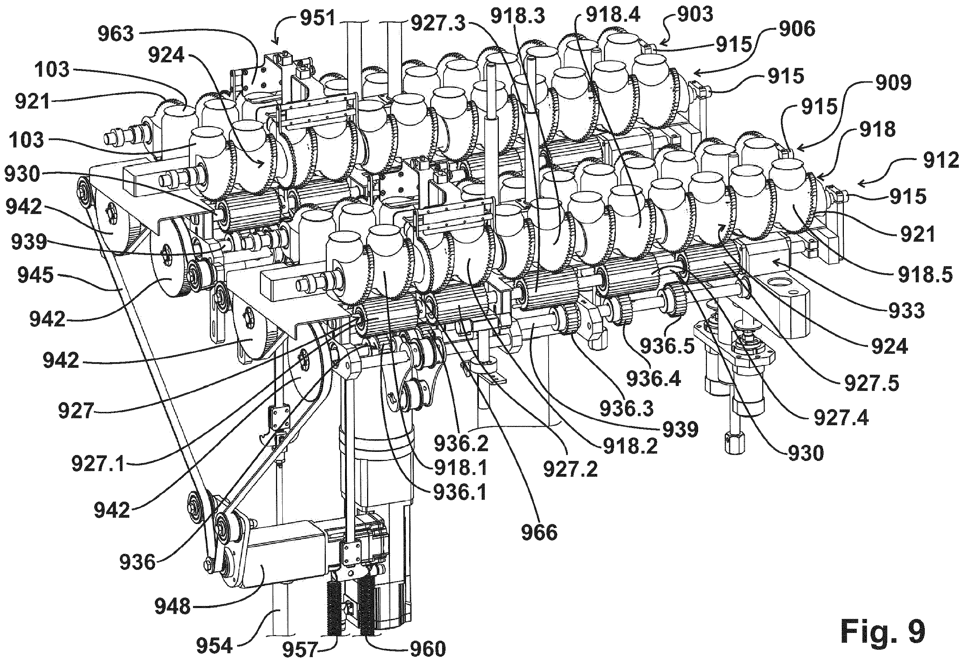

Fig. 9 zeigt in einer perspektivischen Ansicht ein drittes Ausführungsbeispiel einer Vorrichtung gemäß der Erfindung. Das dritte Ausführungsbeispiel gemäß Fig. 9 verfügt über vier Schneckenförderanordnungen 903, 906, 909, 912, die einander gegenüberliegen und in ihren wesentlichen Komponenten identisch aufgebaut sind, wobei zum Vermeiden von Wiederholungen die wesentlichen Komponenten lediglich anhand des Beispiels der dem Betrachter in Fig. 9 zugewandten vorderseitigen Schneckenförderanordnung 912 erläutert sind.

Jede Schneckenförderanordnung 903, 906, 909, 912 verfügt über eine Lagerachse 915, auf der eine Förderschneckengruppe 918 mit einer ersten Förderschnecke 918.1 als Einlaufförderschnecke zum eingangsseitigen Zuführen von Behältnissen 103, eine zweite Förderschnecke 918.2 als Spülförderschnecke zum Zuführen von Behältnissen 103 in eine als Spülstation ausgebildete Behandlungsstation, eine dritte Förderschnecke 918.3 als Füllerförderschnecke zum Zuführen von Behältnissen 103 in eine als Füllstation ausgebildete Behandlungsstation, eine vierte Förderschnecke 918.4 als Zwischenförderschnecke zum Puffern von Behältnissen 103 und eine fünfte Förderschnecke 918.5 als Verschließförderschnecke zum Zuführen von Behältnissen 103 in eine als Verschließstation ausgebildete Behandlungsstation drehbar gelagert sind. Die Förderschnecken 918.1 bis 918.5 verfügen zum Ausbilden eines außenliegenden Antriebsmechanismus über eine Außenzahnstruktur 921, die an den radial außenseitig ausgebildeten Stirnseiten einer spiralförmigen Wendel 924 ausgebildet sind.

Jede Schneckenförderanordnung 903, 906, 909, 912 ist weiterhin mit einer Kupplungszahnradgruppe 927 ausgestattet, die ein erstes Kupplungszahnrad 927.1, ein zweites Kupplungszahnrad 927.2, ein drittes Kupplungszahnrad 927.3, ein viertes Kupplungszahnrad 927.4 und ein fünftes Kupplungszahnrad 927.5 des außenliegenden Antriebsmechanismus aufweist. Die Kupplungszahnräder 927.1 bis 927.5 sind drehbar und in einer axialen Richtung bis auf betriebsübliches Spiel verschiebungsfrei an einer Kupplungsachse 930 gelagert. Die Kupplungsachse 930 ist mittels einer Kupplungsachsenstelleinheit 933 als Schalteinrichtung in Längsrichtung unter Mitnahme der Kupplungszahnräder 927.1 bis 927.5 in eine Anzahl von, bei dem dritten Ausführungsbeispiel gemäß Fig. 9 in zwei, Verschiebestellungen verschiebbar, in denen sie mit verschiedenen Teilgruppen von Förderschnecken 918.1 bis 918.5 einer Förderschneckengruppe 918 über deren Außenzahnstrukturen 921 in Eingriff sind.

Weiterhin ist jede Schneckenförderanordnung 903, 906, 909, 912 mit einer Antriebszahnradgruppe 936 ausgebildet, die über ein erstes Antriebszahnrad 936.1, ein zweites Antriebszahnrad 936.2, ein drittes Antriebszahnrad 936.3, ein viertes Antriebszahnrad 936.4 und ein fünftes Antriebszahnrad 936.5 des außenliegenden Antriebsmechanismus verfügt. Jedes Antriebszahnrad 936.1 bis 936.5 ist drehfest und im Rahmen betriebsüblichen Spiels in Längsrichtung verschiebungsfrei an einer Antriebswelle 939 angebracht.

Jede Antriebswelle 939 ist an einem stirnseitigen Ende drehfest mit einer Synchronscheibe 942 verbunden, wobei die Synchronscheiben 942 über ein ringartig ausgebildetes, geschlossenen Transmissionsglied 945 beispielsweise in Gestalt eines Zahnriemens für eine gemeinsame, bei dem dritten Ausführungsbeispiel gemäß Fig. 9 durch paarweise wechselnde Umschlingung paarweise gleichsinnige und paarweise gegensinnige Drehung gekoppelt sind. Das Transmissionsglied 945 ist weiterhin mit einem Wellenantriebsmotor 948 gekoppelt, mit dem das Transmissionsglied 945 zum Drehen der Synchronscheiben 942 und damit zum Betreiben der Schneckenförderanordnungen 903, 906, 909, 912 antreibbar sind.

Die Schneckenförderanordnungen 903, 906, 909, 912 dienen bei dem dritten Ausführungsbeispiel wie bei dem voranstehend erläuterten Förderschneckenanordnungen 109, 703, 706 dem Transportieren von Behältnissen 103, hier beispielhaft in Gestalt von Getränkedosen, in einer Längsrichtung, wobei die Wendel 924 der Förderschnecken 918.1 bis 918.5 einander gegenüberliegender Schneckenförderanordnungen 903, 906, 909, 912 aufgrund der paarweise wechselnden Drehrichtung der Förderschnecken 918.1 bis 918.5 von einander gegenüberliegenden Schneckenförderanordnungen 903, 906, 909, 912 mit gegensinnigen Drehrichtungen ausgeführt sind, um eine insgesamt gleiche Förderrichtung zu erzielen.

Weiterhin ist in Fig. 9 beispielhaft für eine Behandlungsstation für transportierte Behältnisse 103 eine Spüleinrichtung 951 dargestellt, die neben einem Spülungsbetätigungszylinder 954 und Spülungsrückstellfedern 957, 960 zum Stellen einer Kippeinheit 963 mit einem mit der Kupplungsachse 930 verbundenen Arretierelement 966 zum Arretieren der Kippeinheit 963 in einer Verschiebestellung der Kupplungsachse 930 ausgebildet ist.

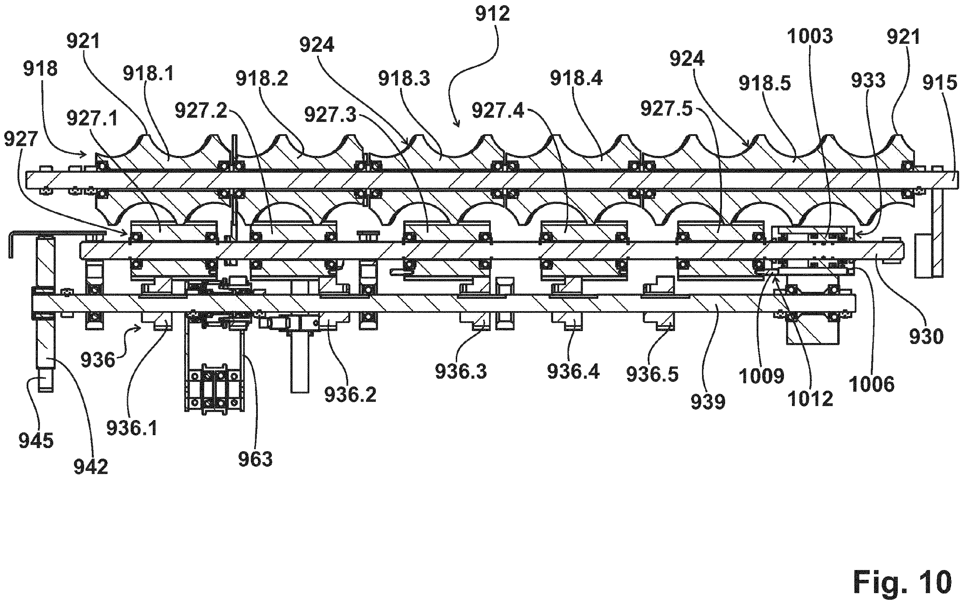

Fig. 10 zeigt das anhand Fig. 9 erläuterte dritte Ausführungsbeispiel einer Vorrichtung zum Transportieren von in Fig. 10 nicht dargestellten Behältnissen 103 in einer Schnittansicht mit der Kupplungsachse 930 in einer in der Darstellung gemäß Fig. 10 rechtsseitig im Anschlag befindlichen ersten Verschiebestellung, in die sie mittels der Kupplungsachsenstelleinheit 933 verbracht worden ist. Der Darstellung gemäß Fig. 10 lässt sich entnehmen, dass die Kupplungsachsenstelleinheit 933 über einen die Kupplungsachse 930 fest umschließenden Verstellschlitten 1003 verfügt, der über ein in Fig. 10 nicht dargestelltes Stellorgan in Längsrichtung der Kupplungsachse 930 verschiebbar in einem Außengehäuse 1006 der Kupplungsachsenstelleinheit 933 gelagert ist und sich in der Verschiebestellung gemäß Fig. 10 ist einer rechtsseitigen Anschlagposition befindet.

In der ersten Verschiebestellung der Kupplungsachse 930 befinden sich das erste Kupplungszahnrad 927 im Eingriff mit dem ersten Antriebszahnrad 936.1, das zweite Kupplungszahnrad 927.2 im Eingriff mit dem zweiten Antriebszahnrad 936.2, das dritte Kupplungszahnrad 927.3 im Eingriff mit dem dritten Antriebszahnrad 936.3 und das vierte Kupplungszahnrad 927.4 im Eingriff mit dem vierten Antriebszahnrad 936.4, während das fünfte Kupplungszahnrad 927.5 eingriffsfrei mit dem fünften Antriebszahnrad 936.5 ist. Dadurch bilden in der ersten Verschiebestellung die erste Förderschnecke 918.1, die zweite Förderschnecke 918.2, die dritte Förderschnecke 918.3 und die vierte Förderschnecke 918.4 eine Teilgruppe von gekoppelten und angetriebenen Förderschnecken 918.1 bis 918.4.

Zum Fixieren des fünften Kupplungszahnrads 927.5 ist das fünfte Kupplungszahnrad 927.5 mit einem Verdrehsicherungsstift 1009 ausgestattet, der sich in der Darstellung gemäß Fig. 10 in einer an dem Außengehäuse 1006 der Kupplungsachsenstelleinheit 933 ausgebildeten Stiftaufnahme 1012 angeordnet ist.

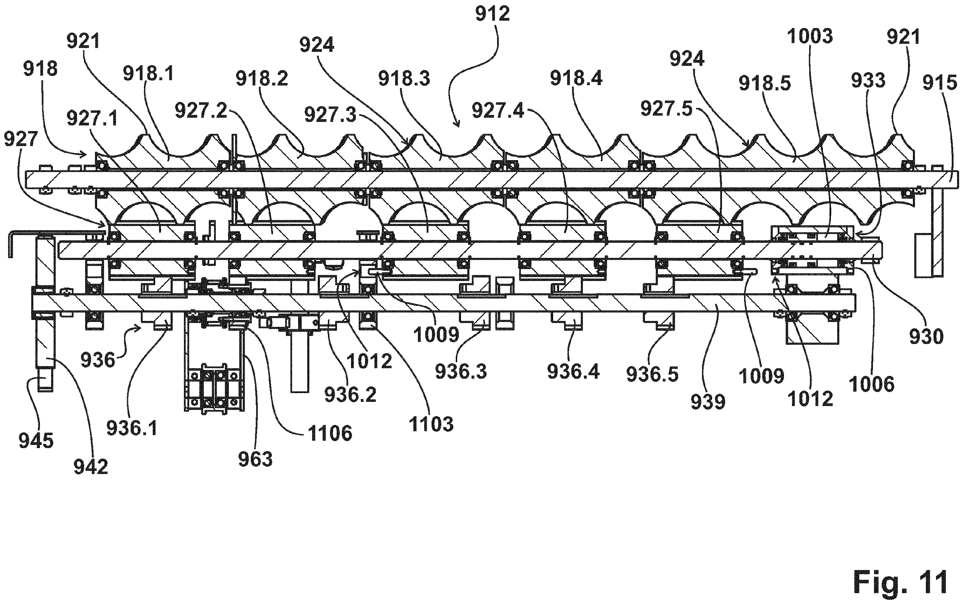

Fig. 11 zeigt in einer Schnittansicht entsprechend Fig. 10 die vierte Schneckenförderanordnung 912 mit der Kupplungsachse 930 in einer in der Darstellung gemäß Fig. 11 linksseitigen zweiten Verschiebestellung, die mittels der Kupplungsachsenstelleinheit 933 ausgehend von der ersten Verschiebestellung gemäß Fig. 10 durch Bewegen des Verstellschlittens 1003 in den linksseitigen Anschlag in dem Außengehäuse 1006 eingenommen worden ist.

In der zweiten Verschiebestellung gemäß Fig. 11 verbleiben das erste Kupplungszahnrad 927.1 im Eingriff mit dem ersten Antriebszahnrad 936.1und das vierte Kupplungszahnrad 927.4 im Eingriff mit dem vierten Antriebszahnrad 936.4, während abweichend von der ersten Verschiebestellung gemäß Fig. 10 das zweite Kupplungszahnrad 927.2 sowie das dritte Kupplungszahnrad 927.3 nunmehr außer Eingriff mit dem zweiten Antriebszahnrad 936.2 beziehungsweise mit dem dritten Antriebszahnrad 936.3 sind und das fünfte Kupplungszahnrad 927.5 nunmehr im Eingriff mit dem fünften Antriebszahnrad 936.5 ist. Aus Fig. 11 ist ersichtlich, dass zum Fixieren des dritten Kupplungszahnrads 937.3 das dritte Kupplungszahnrad 937.3 ebenfalls mit einem Verdrehsicherungsstift 1009 ausgestattet ist, der in der zweiten Verschiebestellung in einer in einem die Antriebswelle 939 umschließenden Lagerteil 1103 ausgebildeten Stiftaufnahme 1012 angeordnet ist.

In der zweiten Verschiebestellung gemäß Fig. 11 bilden nunmehr die erste Förderschnecke 918.1, die vierte Förderschnecke 918.4 und die fünfte Förderschnecke 918.5 eine Teilgruppe von gekoppelten und angetriebenen Förderschnecken 918.1, 918.4, 918.5.

Weiterhin lässt sich der Darstellung gemäß Fig. 11 entnehmen, dass in der zweiten Verschiebestellung das zweite Kupplungszahnrad 927.2 mit einem Schwenkzahnrad 1106 in Eingriff ist, das frei drehbar auf der Antriebswelle 939 gelagert und über eine angeschraubte Schwenksynchronisierscheibe sowie ein Schwenktransmissionsglied zum Drehen um die Antriebswelle 939 antreibbar ist. Dadurch lässt sich die Kippeinheit 963 schwenken und die mit dem zweiten Kupplungszahnrad 927.2 in Eingriff befindliche zweite Förderschnecke 918.2 unabhängig von den anderen Förderschnecken 918.1, 918.3, 918.4, 918.5 drehen.

## Patentansprüche

1. Vorrichtung zum Transportieren von Behältnissen (103) in einer Längsrichtung mit einer Förderschneckenanordnung (109; 703, 706), die eine sich in der Längsrichtung erstreckende, drehbare Förderschnecke (112, 115, 118; 712, 715, 718, 721, 724) aufweist, mit der zwischen einer Wendel (121) der Förderschnecke (112, 115, 118; 712, 715, 718, 721, 724) angeordnete Behältnisse (103) bei Drehen der Förderschnecke (112, 115, 118; 712, 715, 718, 721, 724) in der Längsrichtung verschiebbar sind, **dadurch gekennzeichnet, dass** die Förderschneckenanordnung (109; 703, 706) eine Anzahl von Förderschnecken (112, 115; 712, 715, 718, 721, 724) aufweist, die unabhängig voneinander mittels einer Schalteinrichtung (124) gesteuert wahlweise drehbar sind.

2. Vorrichtung nach Anspruch 1, **dadurch gekennzeichnet, dass** eine Anzahl von verschiedenen Typen von Behandlungsstationen (503; 730) zum verschiedenartigen Behandeln von Behältnissen (103) vorhanden sind, die in Längsrichtung im Bereich der Förderschnecken (112, 115, 118; 712, 715, 718, 721, 724) angeordnet sind.

3. Vorrichtung nach Anspruch 1 oder Anspruch 2, **dadurch gekennzeichnet, dass** jede Förderschnecke (712, 715, 718, 721, 724) zum Ausbilden eines innenliegenden Antriebsmechanismus mit einem innenliegenden Förderschneckenantrieb (803) zum Drehen um eine feststehende Achse (709) antreibbar ist und dass die Schalteinrichtung dazu eingerichtet ist, die Förderschneckenantriebe (803) wahlweise zum Drehen anzusteuern.

4. Vorrichtung nach Anspruch 1 oder Anspruch 2, **dadurch gekennzeichnet, dass** die Schalteinrichtung (124) dazu eingerichtet ist, Förderschnecken (112, 115) mechanisch mit einer drehbaren Antriebswelle (106) zu koppeln und von der Antriebswelle (106) zu entkoppeln.

5. Vorrichtung nach Anspruch 4, **dadurch gekennzeichnet, dass** die Schalteinrichtung (124) einen Betätigungszylinder (127) und von dem Betätigungszylinder (127) anlenkbare Betätigungswellen (139) aufweist, mittels denen zum Ausbilden eines innenliegenden Antriebsmechanismus Koppelstifte (154) in Eingriff und außer Eingriff mit jeweils einem zugeordneten, mit der Antriebswelle (106) verbundenen Antriebsstift (218, 221) bringbar sind.

6. Vorrichtung nach Anspruch 4, **dadurch gekennzeichnet, dass** zum Ausbilden eines außenliegenden Antriebsmechanismus jede Förderschnecke (918.1, 918.2, 918.3, 918.4, 918.5) an radialen Außenseiten einer spiralförmigen Wendel (924) eine Außenzahnstruktur (921) aufweist und dass eine Anzahl von drehfest von einer drehbaren Antriebswelle (939) verbundene Antriebszahnräder (936.1, 936.2, 936.3, 936.4, 936.5) vorhanden sind, mittels denen Förderschnecken (918.1, 918.2, 918.3, 918.4, 918.5) wahlweise zum Drehen antreibbar sind.

7. Vorrichtung nach Anspruch 6, **dadurch gekennzeichnet, dass** zwischen den Förderschnecken (918.1, 918.2, 918.3, 918.4, 918.5) und den Antriebszahnrädern (936.1, 936.2, 936.3, 936.4, 936.5) eine Anzahl von Kupplungszahnrädern (927.1, 927.2, 927.3, 927.4, 927.5) angeordnet sind, die in einer Längsrichtung mit einer Kupplungsachse (930) gekoppelt sind, und dass die Kupplungsachse (930) in Längsrichtung verschiebbar ist.

8. Vorrichtung nach Anspruch 7, **dadurch gekennzeichnet, dass** die Kupplungszahnräder (927.1, 927.2, 927.3, 927.4, 927.5) in einer Verschiebestellung der Kupplungsachse (930) mit einer Teilgruppe von Förderschnecken (918.1, 918.2, 918.3, 918.4) und in einer weiteren Verschiebestellung mit einer weiteren Teilgruppe von Förderschnecken (918.1, 918.4, 918.5) gekoppelt sind.

9. Vorrichtung nach Anspruch 8, **dadurch gekennzeichnet, dass** die Teilgruppen von Förderschnecken (918.1, 918.2, 918.3, 918.4, 918.5) wenigstens eine gemeinsame Förderschnecke (918.1, 918.2, 918.3, 918.4, 918.5) aufweisen.
